Europäisches Patentamt

European Patent Office

Office européen des brevets

(19)

(11) Veröffentlichungsnummer : **0 091 427**
**B1**

(12) # EUROPÄISCHE PATENTSCHRIFT

(45) Veröffentlichungstag der Patentschrift :
05.03.86

(21) Anmeldenummer : **83890051.2**

(22) Anmeldetag : **30.03.83**

(51) Int. Cl.⁴ : **C 09 K   3/18**

(54) **Gefrierschutz- und Eislösemittel.**

(30) Priorität : **01.04.82 AT 1298/82**

(43) Veröffentlichungstag der Anmeldung :
**12.10.83 Patentblatt 83/41**

(45) Bekanntmachung des Hinweises auf die Patenterteilung : **05.03.86 Patentblatt 86/10**

(84) Benannte Vertragsstaaten :
**BE CH DE FR GB IT LI LU NL SE**

(56) Entgegenhaltungen :
**CH-A-   556 446**
**US-A- 2 980 620**

(73) Patentinhaber : **Lang & Co., chemisch-technische Produkte Kommanditgesellschaft**
**Herzog Friedrichplatz 1**
**D-3001 Mauerbach/Wien (AT)**

(72) Erfinder : **Kaes, Gertrude, Dipl.-Ing.**
**Kohlmarkt 1**
**A-1010 Wien (AT)**

(74) Vertreter : **Puchberger, Rolf, Dipl. Ing. et al**
**Patentanwälte, Dipl. Ing. Georg Puchberger Dipl. Ing. Rolf Puchberger Dipl. Ing. Peter Puchberger Singerstrasse 13 Postfach 55**
**A-1010 Wien (AT)**

### Beschreibung

Die Erfindung betrifft Gefrierschutz- und Eislösemittel, enthaltend wasserlösliche Ammonium- und/oder Sulfationen sowie gegebenenfalls weitere Anionen, die mit Calziumionen weitgehend wasserlösliche Calziumverbindungen bilden.

Eislöse- und Gefrierschutzmittel werden zur Erniedrigung des Gefrierpunktes wässriger Lösungen verwendet, um einerseits die Bildung von festem Eis zu verhindern bzw. andererseits bereits gebildetes Eis zur Auflösung zu bringen. Als solche Mittel sind anorganische Salze, wie Natriumchlorid, Magnesiumchlorid, Calciumchlorid, Kaliumphosphate, Natriumphosphate, Ammoniumphosphate, Ammoniumnitrat, Erdalkalinitrate, Magnesiumnitrat, Ammoniumsulfat, Alkalisulfate sowie organische Verbindungen wie niedrigmolekulare Alkohole, Glykole, Glycerin, Lactate oder Harnstoff bekannt.

Neben der gefrierpunkterniedrigenden Wirkung auf Wasser ist beim Einsatz solcher Eislöse- und Gefrierschutzmittel die Frage der Korrosivität des Mittels auf die verschiedenen Werkstoffe sowie des Umweltschutzes von besonderer Bedeutung. Es ist bekannt, daß die bisher meistverwendeten, da billigsten Eislöse- und Gefrierschutzmittel Natriumchlorid bzw. Calzium-/Magnesiumchlorid sind. Gerade der Chlorgehalt bedingt in wässriger Lösung sowohl starke Korrosion von Eisen und anderen metallischen Werkstoffen, Beton und Mauerwerk als auch starke Pflanzenschädigungen. Der Chlorgehalt in solchen Streusalzen oder Salzlösungen erschwert nämlich die Wasseraufnahme in den Wurzeln von Bäumen und niedrigen Pflanzen. Die Chloride wandern dann in die Blätter und verursachen dort Schädigungen. Die Blätter werden vom Rand her braun und fallen frühzeitig ab. Durch Regen und tauenden Schnee werden die Chloride aus den abfallenden Blättern wieder ausgewaschen und der schädigende Chloridkreislauf beginnt von Neuem. Weiters können sich schädliche Auswirkungen auf die Pfoten von Haustieren sowie das menschliche Schuhwerk und die Kleidung ergeben.

Bei der Verwendung von organischen Eislöse- und Gefrierschutzmitteln kann die Korrosionsgefahr zwar leichter gebannt werden, da viele organische Verbindungen weniger agressiv auf Werkstoffe wirken und auch durch Inhibitoren besonders bei Metallen korrosionsverhindernd eingestellt werden können. Neben wirtschaftlichen Fragen — organische Verbindungen sind meist wesentlich teurer als gleich gefrierpunkterniedrigende anorganischer Natur — ergibt sich jedoch bei vielen Produkten ebenfalls das Problem des Umweltschutzes. So ist z. B. das als Gefrierschutzmittel in Kraftfahrzeugen häufig verwendete Monoäthylenglykol äußerst schädlich im Abwasser. Alkohole können ebenfalls giftige Wirkungen haben, wie dies z. B. beim Methylalkohol der Fall ist, und weisen besonders bei niedrigen Molekulargewichten eine hohe Flüchtigkeit auf, was einerseits Geruchsbelästigung und Brandgefahr bringen kann, sowie andererseits auch keine nachhaltige Eisbildungsbehinderung zuläßt. Durch die Luftsauerstoffoxydation solch ein- und mehrwertiger Alkohole können sich Säuren bilden, welche wieder zur verstärkten Korrosion von Werkstoffen Anlaß geben. Es werden diesen organischen Gefrierschutzlösungen daher Puffersubstanzen, wie Kaliumphosphate, Borax und Metallkorrosionsinhibitoren, wie Benzo-, Tolyltriazole, Phosphate, Alkanolaminphosphate, Molybdate zugegeben. Wenn hier die Anwendung von gewissen Phosphaten für Eislöse- und Gefrierschutzmittel als bekannt angegeben ist, so muß hervorgehoben werden, daß diese Phosphate niemals zusätzlich zu $NH_4^+$ und/oder $SO_4^{2-}$ als Betonschutzmittel gegen den Angriff dieser Ionen eingesetzt wurden.

Ein typisches Beispiel für die zuvor genannten Eislöse- und Gefrierschutzmittel ist in der CA-PS 969 345 beschrieben. Solche Mittel werden auch zur Verbesserung der Sicherheit auf Start- und Landebahnen von Flugplätzen eingesetzt, und sind z. B. Gemische aus Formamid, Harnstoff, Wasser und Chromat (CA-PS 981 440). Nach heutiger Erkenntnis dürfen sowohl Formamid als auch Chromate wegen etwaiger gesundheitsgefährdender bzw. abwasserschädlicher Wirkungen für solche Zwecke nicht mehr angewendet werden. Zum raschen Auftauen von eis- und schneebedeckten Flächen werden laut DE-AS 1 459 639 Gemische von Formamid oder Formamidderivaten, wasserlöslichen einwertigen Alkoholen und Glykoläthern empfohlen. In der CS-PS 184 118 werden Äthanol mit Harnstoff und Inhibitoren als flüssige Eislöser auf Flugplätzen und Straßen beschrieben.

Gemäß der DE-OS 2 933 318 ist die Verwendung von Natrium-/Kaliumchlorid in Verbindung mit CaO, $CaCO_3$, MgO und/oder $MgCO_3$ bekannt. Auch hier sind jedoch schädliche Chloride neben unlöslichen Anteilen an Kalk und Dolomit enthalten. Viele Veröffentlichungen beschäftigen sich mit einer Korrosionsverminderung von Streusalz (NaCl), wie z. B. durch Zusatz von 0,1-10 % Kalkstickstoff gemäß DE-PS 2 847 350, wobei der Kalkstickstoff wohl die Metallkorrosion, nicht aber die schädlichen Wirkungen von NaCl auf Pflanzen, Tiere, Baustoffe etc. verringern kann. Ähnliches gilt auch für das Auftausalz (enthaltend 80-99,9 Gewichtsprozent Chloride) mit einem Korrosionsinhibitor laut DE-OS 2 161 522.

Aufgrund der vorbeschriebenen Probleme mit chloridhaltigen Eislöse- und Gefrierschutzmitteln hat es seit langem Bestrebungen gegeben, andere Produkte heranzuziehen, wie Ammonsulfat, Harnstoff, Natriumnitrat. Solche Gemische mit verschiedenen Korrosionsinhibitoren werden z. B. in der AT-PS 191 383 sowie in der US-A-2 980 620 beschrieben. Aus der US-A-2 980 620 ist eine Mischung aus Ammoniumsulfat mit einem Phosphat, nämlich insbesondere Polyphosphat bekannt geworden. Insbesondere beschreibt diese Druckschrift ein Mittel, welches neben den bekannten Grundstoffen Ammonsulfat, Harnstoff und Ammonnitrat ein Polyphosphat und divalente Metallsalze enthält. Das bekannte Mittel dient vor allem als Korrosionsschutz für Metalle, greift jedoch in nachteiliger Weise calziumhältige Baustoffe, wie Beton, Mauerwerk etc. an. Demgegenüber soll das erfindungsgemäße Mittel sowohl derartige Baustoffe als auch Metalle schützen.

Als Gefrierschutzmittel besonders für Löschflüssigkeiten werden in der FR-PS 2 102 933 Gemische von Harnstoff, Ammonchlorid, -phosphat, -sulfat beschrieben. In der US-PS 3 624 243 werden Gemische von Harnstoff und Ammonnitrat mit Äthylenglykol als Enteisungsflüssigkeit empfohlen.

Alle die genannten Zusammensetzungen sollen einen Korrosionsschutz auf Eisen- und besonders auch Leichtmetallen bewirken. Harnstoff allein hat eine relativ geringere Korrosionsneigung, ist jedoch bei Temperaturen ab etwa −8 °C als Enteiser unwirksam, wobei der kryohydratische Punkt seiner wässrigen Lösung bei −11,5 °C liegt.

Ammonsalze, welche tiefere Eislöse- und Stockpunkttemperaturen im Wasser bewirken können, greifen jedoch Beton, Mauerwerk und andere calziumhaltige Baustoffe, wie Betonfahrbahnen, Brückenkonstruktionen, Zufahrten, Wegeplatten, Abwasserrohre, Kanäle etc. an. Es wird daher in vielen europäischen gesetzlichen Bestimmungen der Gehalt an solchen Beton angreifenden Substanzen in Wässern und Böden begrenzt. In der ÖNORM B 3 305 werden z. B. Wässer mit einem Ammonium-$(NH_4)$ Gehalt von unter 15 Milligramm pro Liter als Beton nicht angreifend, mit 15-30 mg/l als schwach angreifend, mit 30-60 mg/l als stark angreifend und mit über 60 mg/l als sehr stark angreifend festgelegt. Ammoniumsalze lösen nämlich Calziumhydroxyd aus dem Zementstein, wobei Ammoniak frei wird. In Hinblick auf den Sulfat-$(SO_4)$ Gehalt von Lösungen wird in derselben Norm ein Gehalt von (A) unter 200 mg/l bei Portland- und Eisenportlandzement, (B) von unter 400 mg/l bei Hochofenzement und (C) von unter 600 mg/l bei sulfatbeständigem Zement (enthaltend höchstens 3 % Tricalziumaluminat berechnet nach Bogue) im Wasser als nicht angreifend auf Beton bezeichnet. Als schwach angreifend gilt bei (A) ein Sulfatgehalt von 200-300 mg/l, bei (B) von 400-500 mg/l und bei (C) von 600-1 500 mg/l Wasser. Stark angreifend ist bei (A) 300-400 mg/l, bei (B) 500-600 mg/l, bei (C) 1 500-3 000 mg/l und sehr stark angreifend bei (A) über 400 mg/l, bei (B) über 600 mg/l, bei (C) über 3 000 mg/l Sulfat in Wasser.

Sulfate setzen sich mit dem Tricalziumaluminat des Zementsteines um und bewirken dabei eine Volumsvergrößerung, wodurch es zu Treiben und Abplatzungen kommt.

Die vorgenannten Grenzwerte, auch bei stark angreifenden Wässern, werden in praktisch allen Fällen bei der Verwendung von Ammonsalzen als Gefrierschutz- und Eislösemittel überschritten. Beim Einsatz von Ammonsulfat, welches zu den preislich günstigsten und in jeder für vorliegende Zwecke benötigten Menge verfügbaren Produkten gehört, ergibt sich daher sowohl bezüglich des Ammonium- als auch des Sulfatgehaltes ein Problem mit dem Angriff auf Beton und sonstige Calziumhydroxyd und Calziumaluminat enthaltende Baustoffe.

Es ist Aufgabe der vorliegenden Erfindung, Eislöse- und Gefrierschutzmittel zu schaffen, welche für Pflanzen, Tiere und Menschen möglichst unschädlich sind, eine gefrierpunkterniedrigende Wirkung auf Wasser auch unter −20 °C ermöglichen, sowie Werkstoffe, wie insbesondere Beton, Mauerwerk und sonstige calziumhaltige Baustoffe in ihrer Festigkeit und Struktur nicht beeinträchtigen. Auch Metalle, wie insbesondere Eisenwerkstoffe, aber auch Leichtmetalle, sollen von den Mitteln nicht oder in nur geringem Ausmaß angegriffen werden. Das erfindungsgemäße Mittel ist in erster Linie gekennzeichnet durch einen Gehalt an Anionen, welche Calziumverbindungen mit einer Wasserlöslichkeit von unter 0,1 Gramm pro 100 Gramm Wasser bei 20 °C bilden sowie einem Gehalt an organischen und/oder anorganischen, in Wasser disperse agglomerierte Systeme (Mizellen) mit einer Teilchengröße von unter 1 000 Mikronmeter bildenden Substanzen. Weitere vorteilhafte und erfindungswesentliche Merkmale sind der nachfolgenden Beschreibung und den Patentansprüchen zu entnehmen.

Wesentlich bei der vorliegenden Erfindung ist also, daß das Gefrierschutz- und Eislösemittel, enthaltend Ammonium- und/oder Sulfatverbindungen, weiter einen solchen Gehalt an Anionen aufweisen, daß bei Einsatz dieser Produkte so weitgehend wasserunlösliche Calziumverbindungen gebildet werden, daß weder das Calziumhydroxyd mit den Ammoniumionen, noch das Tricalziumaluminat mit den Sulfationen wesentlich in wässriger Lösung reagieren können. Diese Schutzwirkung der erfindungsgemäß zugesetzten Anionen auf Baustoffe, welch letztere in der Praxis eine größere Anzahl von Poren und Spalten aufweisen, wird durch den gleichzeitigen Einsatz von Substanzen mit Porenverschlußwirkung synergistisch erhöht, da das Eindringen von ammonium- und/oder sulfathaltigen Wässern in das Innere der Baumaterialien behindert wird.

Wasserlösliche Verbindungen, deren Anionen mit Calziumkationen Verbindungen mit geringstmöglicher Wasserlöslichkeit bilden, bestehen insbesondere aus Ammonium- und/oder Alkaliphosphaten, sowie organischen Mono- und Polycarbonaten. Fluoride bzw. Silicofluoride bilden ebenfalls weitgehend wasserunlösliche Calziumverbindungen, aus Umweltschutzgründen kann die Verwendungsmöglichkeit dieser Anionen jedoch beschränkt sein.

Die Löslichkeit von Calziumhydroxyd — $Ca(OH)_2$ — beträgt bei 18 °C 0,118 g CaO bzw.

0,152 g Ca(OH)$_2$ und die von Gips — CaSO$_4$ · 2H$_2$O — 0,2036 g pro 100 g Wasser. Um daher die Bildung von in Wasser gelöstem Calziumhydroxyd — das mit Ammoniumionen reagiert — zu verhindern, wird gemäß Erfindung das in den Oberflächen von Baustoffen enthaltene Ca(OH)$_2$, welches mit Eislösern und Gefrierschutzmitteln enthaltend Ammonsalze in Berührung kommt, in wasserunlöslichere Verbindungen umgesetzt. Das gleiche Prinzip gilt für das Tricalziumaluminat im Beton. Solche relativ wasserunlöslicheren Calziumverbindungen stellen z. B. die vorgenannten ortho-Phosphate dar. Durch Umsetzung von Calziumionen in wässriger Lösung mit PO$_4$-Anion bildet sich CaHPO$_4$, welches bei 24,5 °C eine Löslichkeit von lediglich 0,02 g/100 g Wasser aufweist sowie bei weiterer Anwesenheit von Ammoniak der wasserbeständige Hydroxylapatit — Ca$_3$(PO$_4$)$_2$ · Ca(OH)$_2$ — aus welchem bekanntlich auch vorwiegend der Zahnschmelz (Zahnsubstanz) besteht.

Ähnlich wasserunlösliche Calziumverbindungen bilden organische Carbon- und Polycarbonsäure-Anionen, wobei meist durch Wahl erhöhter Länge der Kohlenwasserstoffkette die Unlöslichkeit daraus resultierender Calziumverbindungen verstärkt werden kann. Der Einsatz von Dicarbonsäure-Salzen, wie Kalium-, Ammoniumsalze aus Gemischen der Malon-, Bernstein-, Glutar-, Adipinsäure kann gegenüber den Monocarbonsäureverbindungen, wie Alkali- und Ammoniumseifen der z. B. Palmitin- und/oder Stearinsäure bevorzugt sein, da die wasserlöslichen Dicarbonatsalze selbst meist gute gefrierpunktserniedrigende Wirkung auf Wasser aufweisen und daher additiv zu den ammonium- und/oder sulfathaltigen Gefrierschutz- und Eislösemitteln wirken. Auch Alkali- und Ammonphosphate weisen solche gefrierpunktserniedrigende Wirkungen auf Wasser auf, sodaß sie nicht nur Schutzmittel für Baustoffe, sondern auch einen stockpunktverbessernden Bestandteil des Gefrierschutz- und Eislösemittels bilden.

Die Bildung von Gips aus Sulfate enthaltenden Gefrierschutz- und Eislösemitteln wird durch vorgenannte Zusätze ebenfalls behindert, da z. B. die Wasserlöslichkeit des sekundären Calziumphosphates nur etwa 1/10 derjenigen von Gips selbst beträgt.

Die Schutzwirkung von Baustoffen, enthaltend wasserlösliche Calziumverbindungen, kann daher beim Einsatz von Ammonium- und/oder Sulfat enthaltenden Gefrierschutz- und Eislösemitteln durch Zusätze erreicht werden, welche wasserunlöslichere Calziumverbindungen — im Vergleich zu Calziumhydroxyd, Tricalziumaluminat und Gips — bilden, wenn diese Zusätze in genügend großer Menge vorhanden sind und in allen Bereichen wirken können, um die Reaktion von Calziumhydroxyd mit Ammonsalzen bzw. die Gipsbildung etc. im wesentlichen zu verhindern.

Diese Zusätze, wie insbesondere die Salze der ortho-Phosphorsäure und organischen Dicarbonsäuren, sind üblicherweise wesentlich teurer als z. B. Ammonsulfat. Durch die bei Baustoffen zumindest im Mikroausmaß üblichen zerklüfteten Oberflächen, verbunden mit auch tiefergreifenden Poren und Spalten, kann das Eislöse- und Gefrierschutzmittel eindringen und auch längere Zeit mit den Baustoffbestandteilen reagieren. Für eine ausreichende Schutzwirkung wäre daher einerseits ein relativ hoher Anteil an teuren Schutzstoffen nötig, andererseits sollen etwaige auftretende Volumsänderungen im Inneren der Baustoffe, hervorgerufen durch Reaktionen mit den Schutzstoffen, ebenfalls vermieden werden. In überraschender Weise hat sich gezeigt, daß die gemäß Erfindung zugesetzten, in Wasser kolloidartig verteilten Dispersionen, wie z. B. hochdisperse Kieselsäure, Aluminium-/Magnesiumsilikate mit hoher Oberfläche sowie organische hochmolekulare Verbindungen eine synergistische Wirkung auf die im Mittel ebenfalls vorhandenen Phosphate, Dicarbonate etc. beim Schutz von Baustoffen aufweisen. Dies dürfte darin begründet sein, daß diese hochdispersen Stoffe mit hohem Molgewicht oder starker Agglomeration als Porenverschluß im Baustoff zumindest oberflächlich wirken und das Eindringen von Ammonium- und/oder Sulfat enthaltenden Eislöse- und Gefrierschutzmitteln in das Innere dieser Materialien behindern. Dadurch wird die Schutzwirkung des Mittels erhöht, bzw. kann die notwendige Menge der teuren Zusätze im Mittel bei gleicher Schutzwirkung verringert werden.

Die nachfolgenden Beispiele sollen die vorliegende Erfindung auszugsweise näher erläutern :

Beispiel 1

Ein Feststoffgemisch bestehend aus 50 Gew. % Ammonsulfat, 39,5 Gew. % Harnstoff, 10 Gew. % Diammonphosphat und 0,5 Gew. % hochdisperser Kieselsäure mit einer mittleren Größe der Primärteilchen von 12 Millimikron (Handelsname « Aerosil 200 ») wird homogen in einem Mischer hergestellt. Von diesem festen Eislöse- und Gefrierschutzmittel werden 100 g mit 200 g Eisstückchen gemischt und zerstoßen. Bei Kühlung dieser Mischung ergibt sich, daß eine Verflüssigung bei − 15 °C und eine Wiederverfestigung (Stockpunkt — kryohydratischer Punkt) bei − 24 °C eintritt. Harnstoff allein ergibt bei analogen Bedingungen eine Verflüssigung bei − 8 °C und einen Stockpunkt von − 11,5 °C.

Eine Einwirkungszeit dieses Feststoffgemisches auf Baumaterialien entsprechend einem zweijährigen Wintereinsatz hat keinerlei Beschädigungen gezeigt. Alle Oberflächen waren unverändert.

Beispiel 2

Es wird ein Feststoffgemisch aus pulverisiertem Harnstoff, Ammonsulfat und Diammonphosphat mit den Analysewerten von 42,98 Gew. % SO$_4''$, 16,61 Gew. % NH$_4^+$, 3,30 Gew. % PO$_4''$ und 7,53 Gew. % organischem Kohlenstoff (Kohlenstoff des Harnstoffes) sowie 2,00 Gew.-% Wasserunlösliches, bestehend aus Aluminiumsilikat mit einer mittleren Teilchengröße von 0,2 Mikron (Handelsname « Kaophile 2 ») hergestellt. Eine 5 cm dicke Eisplatte der Dimension 135 mm × 200 mm wird mit 0,405 g (= 15 g/m² Oberfläche) dieses Eislösemittels bestreut. Der darauf folgende Verlauf des Auftauens wird bei 20 °C beobachtet. Das Eindringen des Auftaumittels in die Eisoberfläche benötigt 30 Sekunden, das Vordringen desselben an die Unterseite der Eisplatte 3 Minuten ; Aufschwimmen der Eisplatte tritt nach 6 Minuten ein, während ein weitgehendes Schmelzen des Eises nach 8 Minuten erfolgt. Die analogen Werte bei Streusalz (NaCl) als Auftaumittel betragen 30 Sekunden, 3,5 Minuten, 8,5 Minuten und 14 Minuten. Es zeigt sich, daß das erfindungsgemäße Eislösemittel eine schnellere Auftauwirkung als das chloridhaltige Streusalz aufweist. Angriffe auf Baustoffe treten bei diesem erfindungsgemäßen Eislöser auch langzeitig nicht ein. Das NaCl-haltige Streumittel verursacht hingegen starke Angriffe auf Betonplatten in analogen Zeiträumen (3mal 6 Monate).

Beispiel 3

Es wird ein Feststoffgemisch bestehend aus 83,5 Gew. % Ammonsulfat, 15,00 Gew. % Harnstoff und 1,5 Gew. % einer hydrophilen Fällungskieselsäure mit einer mittleren Teilchengröße von 5 Mikron (Handelsname « Sipernat 22 S ») hergestellt. Weiters werden 10 Gew. % eines Kaliumsalzes von Dicarbonsäuren (30-35 Gew. % Adipinsäure, 40-45 Gew. % Glutarsäure und 20-25 Gew. % Bernsteinsäure, wie sie bei der Adipinsäureherstellung als Nebenprodukt anfallen) in 20 Gew. % Wasser aufgelöst. Das Feststoffgemisch wird gleichzeitig mit der wässrigen Lösung der Kaliumdicarbonate als Eislösemittel in Form einer Feucht-/Feststreuung auf Betonstraßen eingesetzt. Der Vorteil dieser Streumethode besteht darin, daß das Feststoffgemisch weder durch Windeinfluß noch durch die Fahrzeugbewegung so leicht weggeblasen werden kann und einen noch rascheren Beginn der Eislösung gewährleistet. Die damit behandelten Betonoberflächen (Straßen und Brücken) blieben bei der üblichen Streumenge von 15-20 g pro m² Oberfläche völlig intakt und wiesen weder Gipsbildungen noch Herauslösungen von Calciumverbindungen auf. Das Streumittel konnte bis zu Temperaturen von − 26 °C wirksam eingesetzt werden.

Beispiel 4

Ein Gemisch analog Beispiel 1 wird hergestellt, wobei allerdings anstatt der hochdispersen Kieselsäure (« Aerosil 200 ») 0,5 Gew. % eines Äthylenoxydpolymers mit einem Molekulargewicht von ca. 4 000 000 (Handelsname « Polyox WSR 301 ») eingesetzt wird. Sowohl die Frostschutzwirkung als auch der Schutz von Beton- und Steinoberflächen ist analog dem Produkt des Beispiels 1.

Beispiel 5

Ein Gemisch von 45 Gew. % Harnstoff, 45 Gew. % Ammonsulfat, 9 Gew. % bestehend aus je 50 Relativ % Kaliumhydrogen- und Kaliumdihydrogenphosphat sowie 1 Gew. % disperser Kieselsäure mit einer durchschnittlichen Teilchengröße von 0,021 Mikron (Handelsname « Hi-Sil T 600 Silicon Thickner ») wird auf seine Gefrier- und Bautenschutzwirkung geprüft. Die Eislösewirkung besteht bis unter − 20 °C, die mineralischen Baustoffe weisen auch bei Dauertests mit erhöhter Temperatur (bis + 30 °C) keine Beschädigungen auf.

Beispiel 6

Eine wässrige Lösung enthaltend 35 Gew. % Ammonnitrat, 10 Gew. % Diammonphosphat und 3 Gew. % kolloidaler Kieselsäuredispersion mit einem Feststoffgehalt von relativ 30 % und einer mittleren $SiO_2$ Teilchengröße von 8 Mikron (Handelsname « Nalcoag 1 130 ») bleibt bis ca. −25 °C flüssig und kann vorteilhaft z. B. als Kälteübertragungsflüssigkeit eingesetzt werden. Es besteht guter Korrosionsschutz auf Metallen und es werden Baustoffe enthaltend wasserlösliche Calciumverbindungen nicht angegriffen.

Anwendungsbeispiel A

Zur Untersuchung des Eislöse- und Gefrierschutzmittels laut obigem Beispiel 1 in vestärkten Labortests wurde eine 3 %-ige wässrige Lösung desselben während 6 Monaten auf Gehwegplatten, welche in ihrer Verschleißschichte einen durch Mikrohohlkugeln verursachten künstlichen Luftporenanteil aufwiesen, einwirken gelassen. Die Prüflösung wurde monatlich erneuert. Analoge Platten wurden unter gleichen Bedingungen in Leitungswasser (neutral, 12 Grad deutsche Härte) gelagert. Nach der halbjährigen Prüfzeit wurde festgestellt, daß alle Kanten und Ecken der Prüfplatten geradlinig und scharfkantig geblieben sind und keinerlei Verwölbungen, Risse oder Abplatzungen auftraten.

Der Mittelwert der Biegezugfestigkeiten ergab nach diesen 6 Monaten bei der 3 %-igen wässrigen Prüflösung des Eislöse- und Gefrierschutzmittels und bei durchschnittlichen Rohdichten von 2,30 kg/dm³ einen Wert von 11,6 N/mm² und beim Vergleich mit reinem Leitungswasser 2,39 kg/dm³ und 11,7 N/mm².

Da die vorgenannten Normproben beim Einsatz der Prüflösung laut Beispiel 1 keine Beeinflussung der ansonst auf übliche Streusalze hochanfälligen Betonplatten trotz hohem Gehalt an sowohl Ammonium als auch Sulfationen zeigten, wurden die Prüfkörper noch zusätzlich — nach vorgenannter sechsmonatiger ständiger Einwirkzeit — 30 Tage lang dieser 3 %-igen wässrigen Prüflösung bei einer erhöhten Temperatur von + 40 °C ausgesetzt. Auch nach dieser so verstärkten Belastung waren alle Kanten und Ecken der Proben weiterhin geradlinig und scharfkantig. Verwölbungen, Risse und Abplatzungen traten ebenfalls an keiner Stelle auf.

Es zeigte sich daher, daß dieses erfindungsgemäße Eislöse- und Gefrierschutzmittel selbst bei Betonoberflächen mit hohem Luftporengehalt einen vollständigen Schutz gegen den Angriff von Sulfat- und Ammoniumionen gibt. Bei Anwendung von Vergleichslösungen, ohne den in Beispiel 1 genannten Gehalt an Phosphat und hochdisperser Kieselsäure, wiesen die Probeplatten schon nach der Normprüfung bei Raumtemperatur sowohl starke Verluste der Biegezugfestigkeit als auch Risse, Abplatzungen und Verwölbungen auf.

Anwendungsbeispiel B

In je 1 000 cm³ wässriger Lösungen von Industrie-Streusalz (NaCl) und Eislöse-/Gefrierschutzmittel laut Beispiel 1 wurden Blechstreifen aus Schwarzblech bei 20 °C unter mechanischem Rühren 10 Tage lang gelagert. Der Gewichtsverlust bei einer 5 %-igen NaCl-Lösung betrug 470 mg/dm².d, derjenige bei der erfindungsgemäßen 5 %-igen Eislöse- und Gefrierschutzlösung 4,5 mg/dm².d. In den beschriebenen Lösungen und einer zusätzlichen 5 %-igen wässrigen Harnstoff-Lösung wurde nach 4 Tagen der gebildete Korrosionsniederschlag abfiltriert, verascht und als Oxydasche gewogen. Es entstanden dabei folgende Mengen Oxydasche in Gew. % der eingesetzten Schwarzblechstreifen :

NaCl : 1,80 %, Harnstoff : 0,20 %, Beispiel 1 : 0,05 %.

Allgemein sei zum erfindungsgemäßen Mittel noch gesagt, daß in bevorzugter Weise der Gehalt an Anionen mit geringer Wasserlöslichkeit seiner Calziumverbindungen 0,5-50 Gew. %, insbesondere 2-25 Gew. %, und der Anteil an hochdispersen Stoffen 0,1-25 Gew. %, insbesondere 0,25-5 Gew. %, bezogen auf die Gesamtmasse des Mittels beträgt. Die disperse Systeme bildenden Substanzen können in vorteilhafter Weise auch Polyelektrolyte, wie insbesondere höhermolekulare Polyäthylenoxyde, Polyacrylate oder Polyacrylamide sein.

**Patentansprüche**

1. Gefrierschutz- und Eislösemittel, enthaltend wasserlösliche Ammonium- und/oder Sulfationen sowie gegebenenfalls weitere Anionen, die mit Calziumionen weitgehend wasserlösliche Calziumverbindungen bilden, gekennzeichnet durch einen Gehalt an Anionen, ausgewählt aus der Gruppe Phosphat-, organische Carbonsäure-, Polycarbonsäure-, Fluorid- oder Silicofluorid-anionen, deren Calciumverbindungen eine Wasserlöslichkeit von unter 0,1 Gramm pro 100 Gramm Wasser bei 20 °C aufweisen, sowie durch einen Gehalt an organischen und/oder anorganischen, in Wasser disperse agglomerierte Systeme (Mizellen) mit einer Teilchengröße von unter 1 000 Mikronmeter bildenden Substanzen, ausgewählt aus der Gruppe hochdisperse Kieselsäure, Magnesiumsilikate, Aluminiumsilikate, Polyelektrolyte, wie insbesondere höhermolekulare Polyäthylenoxyde, Polyacrylate oder Polyacrylamide.

2. Mittel nach Anspruch 1, dadurch gekennzeichnet, daß der Gehalt an Anionen mit geringer Wasserlöslichkeit seiner Calziumverbindungen 0,5-50 Gew.- %, insbesondere 2-25 Gew.- %, und der Anteil an hochdispersen Stoffen 0,1-25 Gew.-%, insbesondere 0,25-5 Gew.- %, bezogen auf die Gesamtmasse des Mittels, beträgt.

3. Mittel nach den Ansprüchen 1 und 2, dadurch gekennzeichnet, daß das Anion mit geringer Wasserlöslichkeit seiner Calziumverbindungen organisches Dicarbonat mit mindestens 3 Kohlenstoffatomen ist.

4. Mittel nach Anspruch 3, dadurch gekennzeichnet, daß das organische Dicarbonat als Kalium- und/oder Ammoniumsalz von Gemischen der Malon-, Bernstein-, Glutar- und/oder Adipinsäure vorliegt.

**Claims**

1. Anti-freeze and ice-release agent, containing water-soluble ammonium ions and/or sulphate ions and, optionally, additional anions which form with calcium ions largely water-soluble calcium compounds, characterised by a content of anions, selected from the group of phosphate anions, organic carboxylic acid anions, polycarboxylic acid anions, fluoride anions or silicofluoride anions, the calcium compounds of which have a water solubility of less than 0.1 gram per 100 gram of water at 20 °C, and by a content of organic and/or inorganic substances, forming agglomerated systems (micelles), dispersed in water and having a particle size of less than 1 000 micrometres, selected from the group of ultra-fine silica, magnesium silicates, aluminium silicates, polyelectrolytes, such as, in particular, higher-molecular polyethyleneoxides, polyacrylates or polyacrylamides.

2. Agent according to Claim 1, characterised in that the content of anions forming calcium compounds of low solubility in water is 0.5 to 50 % by weight, particularly 2 to 25 % by weight, and that the content of ultra-fine substances is 0.1 to 25 % by weight, particularly 0.25 to 5 % by weight, both relative to the total mass of the agent.

3. Agent according to Claims 1 and 2, characterised in that the anion forming calcium compounds of low solubility in water is an organic dicarboxylate having at least 3 carbon atoms.

4. Agent according to Claim 3, characterised in that the organic dicarboxylate is present as the potassium salt and/or ammonium salt of mixtures of malonic, succinic, glutaric and/or adipic acid.

**Revendications**

1. Produit antigel et déglaçant, contenant des ions ammonium et/ou sulfate solubles dans l'eau ainsi qu'éventuellement d'autres anions qui forment avec des ions calcium des composés de calcium profondément solubles dans l'eau, caractérisé par une teneur en anions, choisis parmi le groupe des anions phosphate, d'acide carboxylique organique, d'acide polycarboxylique, fluorure ou silicofluorure, dont les composés de calcium présentent une solubilité dans l'eau inférieure à 0,1 g/100 g d'eau à 20 °C, ainsi que par une teneur en substances organiques et/ou inorganiques, formant dans l'eau des systèmes dispersés agglomérés (micelles) présentant une dimension de particules inférieure à 1 000 microns, ces substances étant choisies parmi le groupe comprenant de l'acide silicique fortement dispersé, des silicates de magnésium, des silicates d'aluminium, des polyélectrolytes, tels que notamment des oxydes de polyéthylène à poids moléculaire élevé, des polyacrylates ou des polyacrylamides.

2. Produit suivant la revendication 1, caractérisé en ce que la teneur en anions dont les composés de calcium présentent une faible solubilité dans l'eau est de 0,5 à 50 % en poids, en particulier de 2 à 25 % en poids, et en ce que la fraction en substances fortement dispersées est de 0,1 à 25 % en poids, en particulier de 0,25 à 5 % en poids, par rapport à la masse totale du produit.

3. Produit suivant l'une des revendications 1 et 2, caractérisé en ce que l'anion dont les composés de calcium présentent une faible solubilité dans l'eau est un dicarbonate organique comprenant au moins 3 atomes de carbone.

4. Produit suivant la revendication 3, caractérisé en ce que le dicarbonate organique se présente sous la forme d'un sel de potassium et/ou d'ammonium de mélanges d'acide malonique, d'acide succinique, d'acide glutarique et/ou d'acide adipique.